Europäisches Patentamt

European Patent Office

Office européen des brevets

(11) Veröffentlichungsnummer: **0 209 750**

**A1**

(12) **EUROPÄISCHE PATENTANMELDUNG**

(21) Anmeldenummer: 86108657.7

(22) Anmeldetag: 25.06.86

(51) Int. Cl.4: **G06F 3/147** , B65G 1/137 , H01H 9/00 , G09F 9/00

(30) Priorität: 26.07.85 DE 3526867

(43) Veröffentlichungstag der Anmeldung: 28.01.87 Patentblatt 87/05

(84) Benannte Vertragsstaaten: **AT BE CH DE FR GB IT LI LU NL**

(71) Anmelder: **Interroll Fördertechnik GmbH & Co. KG**
**Postfach**
**D-5632 Wermelskirchen 2(DE)**

(72) Erfinder: **Specht, Dieter**
**Neuenweg 61**
**D-5632 Wermelskirchen 3(DE)**

(74) Vertreter: **Patentanwälte Müller-Boré, Deufel, Schön, Hertel, Lewald, Otto**
**Postfach 26 02 47 Isartorplatz 6**
**D-8000 München 26(DE)**

(54) **Vorrichtung zum beleglosen Kommissionieren von Waren.**

(57) Die Mengenanzeige 22 einer Vorrichtung zum beleglosen Kommissionieren besteht aus einer Abdeckung (36), die vorzugsweise aus Kunststoff ausgebildet ist und ein Sichtfeld (38) für eine Leuchtanzeige (24) freiläßt. Durch die Abdeckung (36) ist ein Betätigungsknopf (50) für einen Schalter geführt, der zusammen mit der Digitalleuchtanzeige (24) auf einer gedruckten Platte befestigt ist. Die Platte und der Betätigungsknopf 50 sind über Schnappsitz an der Abdeckung (36) gehalten und die Abdeckung (36) wird über Schnappsitz an der Lagervorrichtung befestigt.

FIG. 2

## Vorrichtung zum beleglosen Kommissionieren von Waren

Die Erfindung betrifft eine Vorrichtung zum beleglosen Kommissionieren, mit einer Lagervorrichtung für die zu kommissionierenden Waren, mit einer Recheneinheit und mit mit der Recheneinheit verbundenen elektronischen Mengenanzeigen im Bereich jeder Ware, wobei jede Mengenanzeige einen Schalter zum Quittieren und eine Digitalleuchtanzeige aufweist.

Derartige Vorrichtungen finden immer mehr Anwendung in Unternehmen, welche aus einer Vielzahl von Waren individuelle Aufträge zusammenstellen müssen. Beispielsweise sind derartige Vorrichtungen bei Arzneimittelgroßhandlungen zu finden. Der Vorteil dieser Vorrichtung liegt darin, daß die Person, die die Aufträge zusammenstellen muß, kein Papier mehr benötigt, da über einen Rechner gesteuert jede Ware, von der eine bestimmte Menge geordert ist, über die Mengenanzeige angezeigt wird. Nach der Entnahme der Ware aus dem entsprechenden Vorratsbehälter muß die Bedienungsperson lediglich den Schalter betätigen, um zu quittieren, daß die Ware entnommen und in dem entsprechenden Behälter, in welchem der Auftrag zusammengestellt wird, abgelegt ist.

Die Mengenanzeigen bei herkömmlichen Vorrichtungen bestehen aus einer Vielzahl von Einzelteilen aus unterschiedlichen Werkstoffen, die über Verschraubungen zusammengesetzt sind. Diese Mengenanzeigen sind teuer in der Herstellung und aufwendig in der Montage. Jede der bekannten Mengenanzeigen ist mit einer eigenen Dekodierplatine versehen, was die Herstellungskosten zusätzlich vergrößert.

Der Erfindung liegt die Aufgabe zugrunde, eine Vorrichtung zum beleglosen Kommissionieren mit derartigen Mengenanzeigen zu schaffen, wobei die Mengenanzeigen billig in der Herstellung und einfach in der Montage sind.

Diese Aufgabe wird erfindungsgemäß dadurch gelöst, daß die Digitalleuchtanzeige und der Schalter auf einer gedruckten Platte angeordnet sind, daß die Platte über Schnappsitz an einer Abdeckung mit einer Schaufläche für die Leuchtanzeige angeordnet ist, daß der Betätigungsknopf für den Schalter über Schnappsitz an der Platte gehalten ist und daß die Abdeckung zusammen mit der Platte und dem Betätigungsknopf über Schnappsitz an der Lagervorrichtung befestigt ist.

Die Mengenanzeige bei der erfindungsgemäßen Vorrichtung besteht aus wenigen Einzelteilen, die ohne Verschraubung nach sehr leicht durchzuführendem Ineinanderstecken über Schnappsitz gehalten werden. Die Abdeckung dient gleichermaßen zur Befestigung der Platte mit der Leuchtanzeige und dem Schalter sowie der Führung und dem Halt des Betätigungsknopfes für den Schalter, als auch der Befestigung aller Teile zusammen an der Lagervorrichtung.

Gemäß einer bevorzugten Ausführungsform besteht die Abdeckung aus Kunststoff und die Schaufläche ist integriert in der Abdeckung ausgebildet, wobei vorzugsweise die Abdeckung an der Oberfläche eine rauhe durchsichtige Struktur aufweist und die Schaufläche in dieser strukturierten Oberfläche ausgespart ist, so daß die Leuchtziffern von unten gut lesbar durchscheinen können.

Gemäß einer bevorzugten Ausführungsform sind an der Unterseite der Abdeckung etwa senkrecht abragende Schenkel angeordnet und an der Innen-und der Außenseite der Schenkel sind - schräg verlaufende Nasen mit ebener Sitzfläche ausgebildet. Die inneren Nasen dienen der Halterung der Platte mit der Leuchtanzeige und dem Schalter und die äußeren Nasen dienen der Verankerung der zusammengesteckten Mengenanzeige an der entsprechenden Stelle einer Lagervorrichtung. Für den Zusammen-und Einbau der Mengenanzeige wird die Platte mit der Leuchtanzeige und dem Schalter von unten zwischen die Schenkel geführt und hochgedrückt, bis die Sitzflächender Nasen an der Unterseite der Platte einrasten. Danach wird die Mengenanzeige nach der Verkabelung der Platte in eine entsprechend ausgebildete Aussparung beispielsweise an dem Rahmen eines Lagerregals soweit eingesteckt, bis die an der Außenseite der Schenkel angeordneten Nasen an dem Rand der Aussparung einrasten.

In Weiterbildung der Erfindung weist der Betätigungsknopf des Schalters eine Druckfläche auf, an der Rückseite der Druckfläche sind Schenkel mit Hinterschneidungen und ein Zapfen zur Anlage an dem Schalter ausgebildet und in der Abdeckung ist ein Durchgangsloch für die Schenkel und die Zapfen ausgebildet. Die Druckfläche wird zusammen mit den Schenkeln und den Zapfen in das Durchgangsloch in der Abdeckung gesteckt, bis die an der Außenseite der Schenkel angeordneten Hinterschneidungen den Rand des Durchgangsloches hintergreifen. Damit ist die Druckfläche fest aber lösbar an der Abdeckung verriegelt.

Wenn in Weiterbildung der Erfindung die Druckfläche des Betätigungsknopfes in Form eines gleichseitigen Dreiecks ausgebildet ist, so kann bei entsprechender Anordnung über diese Fläche und die damit erzielte Pfeilwirkung angedeutet werden, für welchen Abschnitt der Lagervorrichtung die Mengenanzeige vorgesehen ist. Wenn das Durchgangsloch in der Abdeckung quadratisch ist, verläuft eine Seite des gleichseitigen Dreiecks immer parallel zu einer Kante der Abdeckung, so daß die dieser parallel angeordneten Seite des Dreicks gegenüberliegende Spitze einen Hinweis darauf gibt, ob die Mengenanzeige für den darüber-, den darunterliegenden oder einen seitlich angeordneten Bereich der Lagervorrichtung angeordnet ist.

In Weiterbildung der Erfindung sind mehrere Mengenanzeigen über ein Breitbandkabel mit einer Dekodierplatine verbunden und die Dekodierplatinen der Vorrichtung sind mit der Recheneinheit verbunden. Da bei der erfindungsgemäßen Vorrichtung nicht jeder Mengenanzeige eine eigene Dekodierplatine zugeordnet ist, sondern beispielsweise je nach vorhandenen Phasen in dem Breitbandkabel beispielsweise 10 Mengenanzeigen mit einer Dekodierplatine gekoppelt sind, können die Montagekosten infolge des verringerten Materialaufwandes ebenfalls verringert werden.

Ausführungsbeispiele der Erfindung werden anhand der Zeichnung näher erläutert. Es zeigt:

Fig. 1 in Vorderansicht einen Abschnitt einer Vorrichtung zum beleglosen Kommissionieren,

Fig. 2 eine Draufsicht auf eine Mengenanzeige mit digitaler Leuchtanzeige und Quittungstaste,

Fig. 3 einen Schnitt gemäß der Linie III-III von Fig. 2 und

Fig. 4 einen Schnitt gemäß der Linie IV-IV von Fig. 2.

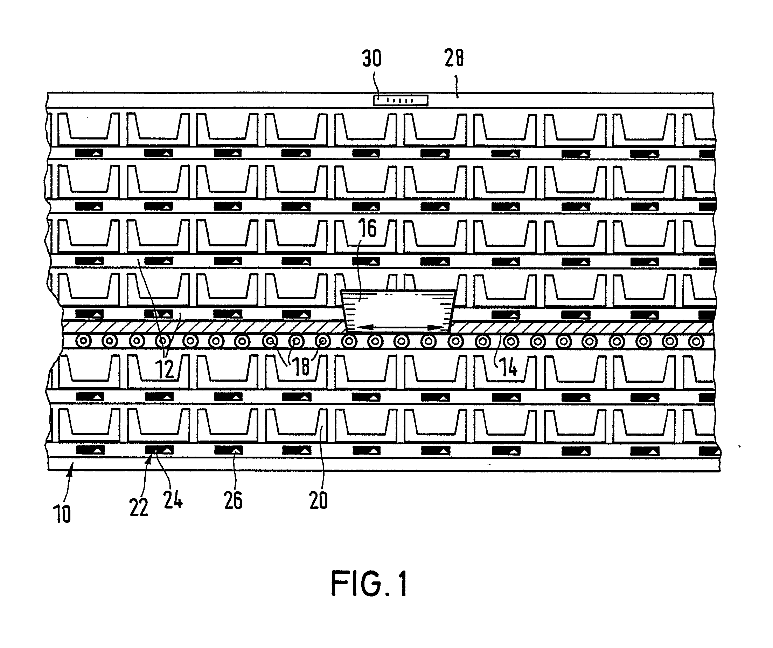

Fig. 1 zeigt einen Abschnitt einer Vorrichtung zum beleglosen Kommissionieren mit einer Lagervorrichtung 10 in Form eines Regals mit übereinander angeordneten Regalböden 12. Vor dem Regal ist eine Förderstrecke 14 vorgesehen, auf welcher Transportbehälter 16 über Rollen 18 verschiebbar sind. Auf jedem der Regalböden 12 sind Warenbehälter 20 abgestellt, in welchen die zu kommissionierenden Waren gelagert sind. Unter jedem Behälter 20 ist an der Vorderkante der Regalböden 12 jeweils eine Mengenanzeige 22 angeordnet. Jede Mengenanzeige 22 besteht aus einer Digitalleuchtanzeige 24 und einem Schalter 26, mit welchem quittiert wird, wenn die durch die Leuchtanzeige 24 angegebene Warenmenge aus einem Behälter 20 entnommen und in den Transportbehälter 16 übergeben worden ist. Nach Betätigung des Schalters 26 erlischt die Leuchtanzeige 24 und in einer mit den Mengenanzeigen 22 verbundenen Recheneinheit wird registriert, daß der Posten des Auftrags abgearbeitet ist und gleichzeitig wird die aus dem Behälter 20 entnommene Ware von den vorher in dem Behälter 20 enthaltenen Warenmengen abgezogen, so daß ständig die noch in der Lagervorrichtung 10 enthaltenen Waren abrufbar sind.

Die Mengenanzeigen 22 sind über ein nicht dargestelltes Breitbandkabel mit Dekodierplatinen verbunden, die wiederum mit der Recheneinheit verbunden sind. Je nach Anzahl der Phasen des Breitbandkabels kann eine mehr oder minder große Anzahl von Mengenanzeigen mit einer Dekodierplatine verbunden sein. Herkömmliche Breitbandkabel weisen zwanzig Phasen auf, so daß zehn Mengenanzeigen mit einer Dekodierplatine verbunden werden können. Damit ist es möglich, die Anzahl der Dekodierplatinen stark zu verringern, da nicht jeder Mengenanzeige eine eigene Dekodierplatine zugeordnet werden muß.

An einem oberen Regalboden 28 ist eine Anzeige 30 vorgesehen, welche gesteuert über die Recheneinheit die Nummer des Transportbehälters 16 anzeigt, in welchen die Waren aus den Behältern 20 eingegeben werden sollen. Wenn alle Waren abgearbeitet worden sind, d.h. wenn alle Mengenanzeigen über die Quittungstaste auf Null gesetzt worden sind, ist der Auftrag abgearbeitet und der Transportbehälter wird zur Ausgabe transportiert.

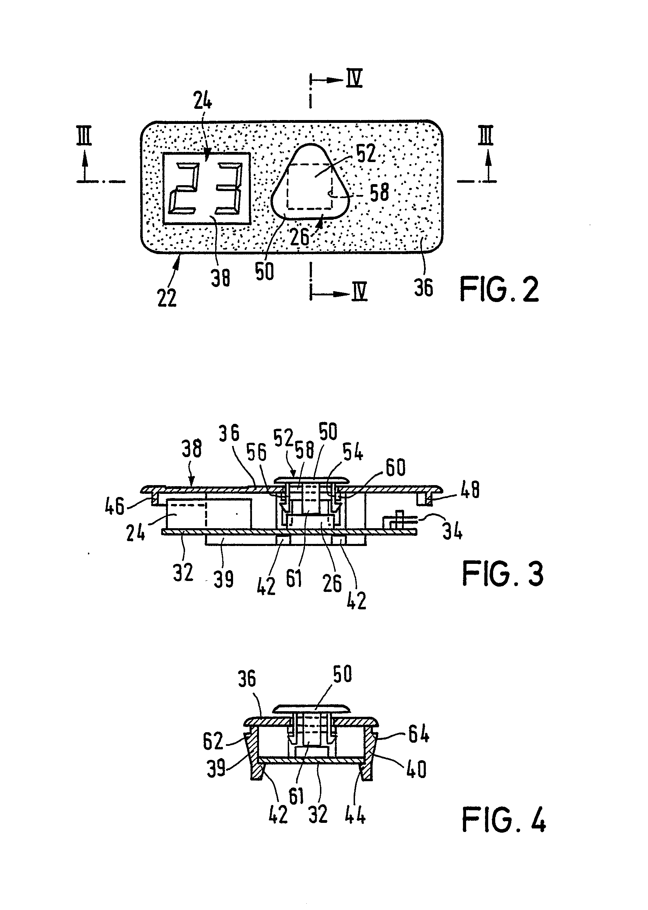

Fig. 2 bis 4 zeigen in vergrößertem Maßstab eine Mengenanzeige 22 mit einer Digitalleuchtanzeige 24 und einem Schalter 26. Wie insbesondere aus Fig. 3 zu ersehen ist, sind die Digitalleuchtanzeige 24 und der Schalter 26 auf einer Platte 32 mit einer gedruckten Schaltung angeordnet. Die Verbindung der auf der Platte 32 vorgesehenen Schaltung mit einer Dekodierplatine erfolgt über Anschlüsse 34, die mit einem Stecker gekoppelt werden, welcher auf ein nicht dargestelltes Breitbandkabel aufgesteckt ist.

Die Platte 32 ist über Schnappsitz an der Unterseite einer Abdeckung 36 angeordnet. Die Abdeckung 36 weist eine Oberfläche mit rauher, undurchsichtiger Struktur auf. Lediglich eine Fläche 38 über der Digitalleuchtanzeige 24 ist glatt ausgebildet, so daß die Leuchtziffern durch die Abdeckung 36 durchscheinen können und gut lesbar sind. An der Unterseite der langgestreckt rechteckig ausgebildeten Abdeckung 36 sind an den Längsseiten Schenkel 39 und 40 ausgebildet, die an ihren Enden Nasen 42 bzw. 44 mit schräger Auflauffläche aufweisen, so daß die Platte 32 zwischen den Nasen 42 und 44 eingeschoben werden kann, bis die ebenen Flächen der Nasen unter der Platte 32 einrasten. An der Unterseite der Abdeckung 36 sind an den Schmalseiten vorstehende Randabschnitte 46, 48 angeformt, welche zur Führung der Abdeckung 36 in einer geeigneten Ausnehmung an der Lagervorrichtung dienen.

Der Schalter 26 wird über einen Betätigungsknopf 50 betätigt, welcher an der Abdeckung 36 über Schnappsitz gehalten wird. Dazu weist der Betätigungsknopf 50 an der Unterseite einer Druckfläche 52 Schenkel 54 und 56 auf, welche mit Hinterschneidungen versehen sind, die nach Eindrücken durch eine Durchgangsöffnung 58 in der Abdeckung 36 vorstehende Ränder 60 der Durchgangsöffnung 58 hintergreifen, so daß der Betätigungsknopf 50 an der Abdeckung 36 gehalten wird. Zur Betätigung des Schalters 26 ist an der Rückseite der Druckfläche 52 ein Zapfen 61 angeformt, der auf der Oberseite des Schalters 26 aufsteht und bei Drücken des Betätigungsknopfes 50 den Schalter 26 auslöst.

Die Schenkel 39 und 40 weisen an der Außenseite schräg auflaufende Nasen 62, 64 mit ebenen Sitzflächen auf, so daß nach Einführen der Abdeckung 36 mit der zwischen den Schenkeln 39 und 40 angeordneten Platte 32 in eine Ausnehmung an der Lagervorrichtung die Nasen 62 und 64 hinter den Rand der dort ausgebildeten Ausnehmung einrasten, so daß die gesamte Mengenanzeige 22 über Schnappsitz an der Lagervorrichtung gehalten wird.

Die Druckfläche 52 des Betätigungsknopfes 50 ist in Form eines gleichseitigen Dreiecks ausgebildet. Da die Durchgangsöffnung 58 quadratisch ist, kann der Druckknopf 50 jeweils um 90° verdreht an der Abdeckung 36 angeordnet werden. Dadurch ist es möglich, eine Seitenkante der Druckfläche 52 parallel zur oberen oder unteren Längsseite oder der rechten oder linken Schmalseite der Abdeckung anzu ordnen. Dadurch ergibt sich eine Pfeilwirkung und die der parallel angeordneten Seitenkante gegenüberliegende Spitze zeigt in die Richtung, in welcher der Behälter 20 angeordnet ist, für den die Mengenanzeige vorgesehen ist. Die Abdeckung 36 und der Betätigungsknopf 50 bestehen vorzugsweise aus Kunststoff und die Sichtfläche 38 ist integral mit der übrigen strukturierten Fläche der Abdeckung 36 ausgebildet.

## Ansprüche

1. Vorrichtung zum beleglosen Kommissionieren, mit einer Lagervorrichtung für die zu kommissionierenden Waren, mit einer Recheneinheit und mit der Recheneinheit verbundenen elektronischen Mengenanzeigen im Bereich jeder Ware, wobei jede Mengenanzeige einen Schalter und eine Digitalleuchtanzeige aufweist, dadurch **gekennzeichnet,** daß die Digitalleuchtanzeige (24) und der Schalter (26) auf einer gedruckten Platte (32) angeordnet sind, daß die Platte (32) über Schnappsitz an einer Abdeckung (36) mit einer Schaufläche - (38) für die Leuchtanzeige (24) angeordnet ist, daß der Betätigungsknopf (50) für den Schalter (26) über Schnapp sitz an der Abdeckung (36) gehalten ist, und daß die Abdeckung (36) zusammen mit der Platte (32) und dem Betätigungsknopf (50) über Schnappsitz an der Lagereinrichtung (10) befestigt ist.

2. Vorrichtung nach Anspruch 1, dadurch **gekennzeichnet,** daß die Abdeckung (36) aus Kunststoff besteht und daß die Schaufläche (38) integriert ausgebildet ist.

3. Vorrichtung nach Anspruch 1 oder 2, dadurch **gekennzeichnet,** daß die Abdeckung - (36) an der Oberfläche mit Ausnahme der Schaufläche (38) eine undurchsichtige Struktur aufweist.

4. Vorrichtung nach einem der Ansprüche 1 bis 3, dadurch **gekennzeichnet,** daß an der Unterseite der Abdeckung (36) etwa senkrechte Schenkel (39, 40) angeordnet sind und daß an den Schenkeln - (39, 40) an der Innen-und der Außenseite schräg verlaufende Nasen (42, 44; 62, 64) mit ebener Sitzfläche angeordnet sind.

5. Vorrichtung nach einem der Ansprüche 1 bis 4, dadurch **gekennzeichnet,** daß der Betätigungsknopf (50) des Schalters (26) eine Druckfläche (52) aufweist, daß an der Rückseite der Druckfläche (52) Schenkel (54, 56) mit Hinterschneidungen und ein Zapfen (61) zur Anlage an dem Schalter (26) ausgebildet sind, und daß in der Abdeckung (36) ein Durchgangsloch (58) für die Schenkel (54, 56) und den Zapfen (61) ausgebildet ist.

6. Vorrichtung nach einem der Ansprüche 1 bis 5, dadurch **gekennzeichnet,** daß die Druckfläche (52) des Betätigungsknopfes (50) in Form eines gleichseitigen Dreiecks ausgebildet ist.

7. Vorrichtung nach einem der Ansprüche 1 bis 6, dadurch **gekennzeichnet,** daß mehrere Mengenanzeigen über ein Breitbandkabel mit einer Dekodierplatine und die Dekodierplatinen mit der Recheneinheit verbunden sind.

FIG.1

FIG. 2

FIG. 3

FIG. 4

Europäisches
Patentamt

**EUROPÄISCHER RECHERCHENBERICHT**

Nummer der Anmeldung

EP 86108657.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B - 2 337 889 (EGGERT) <br> * Gesamt * <br> -- | 1 | G 06 F 3/147 <br> B 65 G 1/137 <br> H 01 H 9/00 |
| A | GB - A - 2 027 209 (GENERAL ELECTRIC) <br> * Gesamt * <br> -- | 1 | G 09 F 9/00 |
| A | US - A - 4 234 869 (SANDELMAN) <br> * Gesamt * <br> ---- | 1 | |

| RECHERCHIERTE SACHGEBIETE (Int. Cl.4) |
|---|
| F 21 Q 3/00 |
| G 01 D 3/00 |
| G 02 F 1/00 |
| G 05 B 15/00 |
| G 06 F 3/00 |
| G 08 B 5/00 |
| G 09 F 9/00 |
| H 01 H 9/00 |
| H 02 B 1/00 |
| H 02 B 9/00 |
| H 03 K 17/00 |
| H 05 K 1/00 |
| H 05 K 7/00 |

Der vorliegende Recherchenbericht wurde für alle Patentansprüche erstellt.

| Recherchenort | Abschlußdatum der Recherche | Prüfer |
|---|---|---|
| WIEN | 30-10-1986 | BAUMANN |